# EUROPÄISCHE PATENTSCHRIFT

(11) **EP 1 763 999 B1**
(45) Veröffentlichungstag und Bekanntmachung des Hinweises auf die Patenterteilung: **02.12.2009**
(21) Anmeldenummer: 06016727.7
(22) Anmeldetag: 10.08.2006
(51) Int. Cl.: A22C 11/02, A22C 11/12

(54) **Portionier- und Verpackungsvorrichtung und -verfahren**
Device and method for portioning and packaging
Dispositif et procédé de portionnement et emballage

(30) Priorität: 20.09.2005 DE 102005044877
(43) Veröffentlichungstag der Anmeldung: 21.03.2007
(73) Patentinhaber: Poly-clip System GmbH & Co. KG, 60489 Frankfurt am Main (DE)
(72) Erfinder: Töpfer, Klaus, 64572 Büttelborn (DE); Niedecker, Frank, 6948 Porza (CH)
(74) Vertreter: Eisenführ, Speiser & Partner

(56) Entgegenhaltungen:
- EP-A- 1 095 570
- EP-A- 1 607 000
- EP-A1- 0 439 671
- DE-B1- 2 645 714
- DE-B3-102005 044 879
- DE-C1- 10 131 807

## Beschreibung

Die Erfindung betrifft eine Portionier- und Verpackungsvorrichtung mit einer Fördereinrichtung für ein Füllgut, einem an die Fördereinrichtung angeschlossenen Füllrohr, welches eingerichtet ist, einen Vorrat einer schlauchförmigen Verpackungshülle so bereitzustellen, dass diese mit dem durch das Füllrohr ausgestoßenen Füllgut von dem Füllrohr abziehbar ist (Füllvorgang), einer stromabwärts des Füllrohres angeordneten Verschließvorrichtung, welche eingerichtet ist, die gefüllte Verpackungshülle lokal zu einem Schlauchzopf einzuschnüren und ein Verschlusselement um den Schlauchzopf zu verschließen (Verschließvorgang). Die Erfindung betrifft ferner ein mittels einer solchen Vorrichtung ausgeführtes Verfahren mit den Schritten: Fördern des Füllguts durch eine Mündung eines Füllrohres in eine einseitig verschlossene, schlauchförmige Verpackungshülle (Füllen), die mit dem Füllgutausstoß von einem Vorrat auf dem Füllrohr abgezogen wird, Einschnüren der gefüllten Verpackungshülle stromabwärts des Füllrohres zu einem Schlauchzopf und Verschließen eines Verschlusselements um den Schlauchzopf.

Solche Portionier- und Verpackungsvorrichtungen und -verfahren insbesondere zum Herstellen von Würsten sind seit langem bekannt. Deren Fördereinrichtung, die sog. Füllmaschine oder kurz Füller, weist einen meist trichterförmigen Einfüll- und Vorratsbehälter für das meist flüssige, pastöse und/oder granulare Füllgut (Brät, Dichtmasse, Sprengstoff oder dgl.) auf. Das Füllgut wird mittels Extruder durch das Füllrohr in die einseitig verschlossene Verpackungshülle ausgestoßen und zieht diese dabei von dem Füllrohr ab. Für eine genaue Portionierung sorgt eine Füllersteuerung, welche der Extruder zur Förderung einer vorbestimmten Portionsgröße ansteuert und anschließend anhält. Zu Beginn der sog. Clippause, in der der Füller steht, gibt die Füllersteuerung einen Steuerimpuls an eine Steuereinrichtung der Verschließvorrichtung aus, welche diese zur Ausführung eines ausgewählten Arbeitszyklus ansteuert.

Der Arbeitszyklus der Verschließvorrichtung oder Clipmaschine umfasst, dass mittels wenigstens zweier Paare gegenläufig bewegbarer Einschnürmittel oder Verdränger in die gefüllte Verpackungshülle eingegriffen wird, um diese lokal zu einem Schlauchzopf einzuschnüren. Danach werden die Einschnürmittel typischerweise axial im Bezug auf die Schlauchhülle gespreizt, um den Schlauchzopf zu verlängern. Anschließend wird mittels ebenfalls gegenläufig bewegbarer Verschließwerkzeugen (Matrize und Stempel) ein oder zwei Verschlusselemente (Clips) auf den Schlauchzopf gesetzt und um diesen herum verformt, bis die Hülle mit der erforderlichen Festigkeit verschlossen ist. Wahlweise kann mittels eines Messers die Verpackungshülle zwischen den zwei Verschlusselementen durchtrennt werden, um einzelne Würste oder Wurststränge gewünschter Länge zu erzeugen. Anschließend öffnen sich die Einschnürmittel und Verschließwerkzeuge wieder und fahren in Ihre Ausgangsstellung (Öffnungsstellung) zurück. Der Arbeitszyklus ist beendet. Die Geschwindigkeit, Zeitpunkte und/oder Wege der einzelnen Arbeitsschritte können anhand einer getroffenen Produktwahl durch eine Bedienperson mittels der Verschließmaschinensteuerung optimal auf die Art und den Durchmesser des zugeordneten Verpackungsmaterials eingestellt werden.

Aus der EP 0 439 671 ist ein Verfahren und eine Vorrichtung zur Herstellung von Würsten durch Abteilen eines Wurststrangs bekannt. Durch ein an einer Füllmaschine angeschlossenes Füllrohr wird mittels einer Flügelzellenpumpe ein Wurstbrät in einen am forderen Ende des Füllrohrs einseitig verschlossenen Darm eingefüllt. Ebenfalls am vorderen Ende des Füllrohrs ist eine nicht näher erläuterte Abteilvorrichtung angeordnet. Das Wurstbrät zieht beim Einfüllen in den einseitig verschlossenen Darm weiteren Darm vom Füllrohr ab. Dadurch bildet sich am Füllrohrausgang eine Wurst. Am Füllrohrausgang angeordnete Messrollen liegen, sobald sich während des Füllvorgangs der zylindrische Teil der Wurst ausbildet, an dieser an. Beim weiteren Befüllen registrieren die Messrollen die Länge des zylindrischen Teils der sich bildenden Wurst. An den Messrollen angeordnete Längenimpulsgeber erzeugen einen Längenimpuls, der mit einem Volumenimpuls eines mit der Pumpe verbundenen Volumenimpulsgeber abgeglichen wird. Durch einen Rechner wird, abhängig vom Kaliber der Wurst, eine Längenänderung pro Volumenimpuls bestimmt. Bei Erreichen der Gesamt-Volumen-Impulszahl wird der Füllvorgang unterbrochen und der Abteilvorgang eingeleitet.

Bekannt ist ferner eine zweite Art von Verschließvorrichtungen. Neben solchen mit Spreizverdrängung, bei welchen die Verdrängerelemente nach dem Einschnüren axial auseinandergefahren werden, um den Einschnürbereich zum Setzen der Clips zu verlängern, ist aus der DE 101 31 807 eine Verschließvorrichtung bekannt, bei welcher zu Gunsten einer einfacheren Kinematik auf eine verlängerte Schlauchzopfbildung verzichtet wird. Diese Art der Verschließvorrichtung kann aufgrund der einfacheren Kinematik mit einer wesentlich höheren Taktrate arbeiten.

Die Taktrate stößt jedoch auf Grenzen seitens der Füllvorrichtung, da diese, unter anderem abhängig von der Viskosität des Füllguts, nicht beliebig schnell anlaufen und anhalten kann.

Aufgabe der Erfindung ist es, die Portionierungsleistung der Portionier- und Verpackungsvorrichtung zu erhöhen bzw. die Portionier- und Verpackungsverfahren effizienter zu gestalten.

Die Aufgabe wird erfindungsgemäß durch eine Portionier- und Verpackungsvorrichtung mit den Merkmalen des Anspruches 1 sowie ein Portionier- und Verpackungsverfahren mit den Merkmalen des Anspruches 9 gelöst.

Der Erfindung liegt die Erkenntnis zu Grunde, dass bei ausreichender Verkürzung der Dauer eines Arbeitszyklus der Verschließvorrichtung der bekannte Füller durch eine Pumpe zum Erzeugen eines kontinuierlichen Volumenstroms ersetzt werden kann. Dies wird bei der erfindungsgemäßen Portionier- und Verpackungsvorrichtung dadurch ermöglicht, dass die Prozesssteuerung, insbesondere die Einstellung der Portionsgröße und der Portionierleistung, auf einfache Weise durch eine der Verschließvorrichtung zugeordnete Steuereinrichtung ausgeführt wird, welche ein Steuersignal zum Einschnüren und Verschließen auf Grundlage einer ausgewählten Portionsgröße und des kontinuierlichen Volumenstroms der Fördereinrichtung erzeugt und an den Antrieb der Verschließvorrichtung ausgibt. Genauer berechnet die Steuereinrichtung aus der ausgewählten Portionsgröße und dem bekannten Volumenstrom einen Füllzeitintervall, nach welchem das entsprechende Steuersignal zum Einschnüren und Verschließen und an die Verschließvorrichtung ausgegeben wird. In bekannter Weise können mittels der Steuereinrichtung zugleich Geschwindigkeit, Zeitpunkte und/oder Wege der einzelnen Arbeitsschritte des Verschließvorgangs optimal auf eine getroffene Produktauswahl eingestellt werden. Der Verschließvorgang greift dann in den laufenden Füllvorgang ein, d.h. er wird durchgeführt, ohne den Füllvorgang zu unterbrechen.

Dies erlaubt eine Effizienzsteigerung, da der Produktionstakt nicht mehr durch den Takt der Füllvorrichtung begrenzt wird. Durch die kontinuierliche Füllung kann aber auch noch die Zeit eingespart werden, welche andernfalls bei den bekannten Vorrichtungen während der Clippausen verstreicht. Oder umgekehrt kann der Volumenstrom während des Füllgutausstoßes bei gleichbleibender Produktionsgeschwindigkeit vermindert werden, um beispielsweise Material zu schonen. Durch die Erfindung werden also Kosten für die bekanntermaßen teuren und aufwändigen Füller und Mühen hinsichtlich der Synchronisation der Fördereinrichtung und der sich daran anschließenden Verschließvorrichtung gespart, da anstelle der bisher vorhandenen zwei Steuereinrichtungen für den Füller einerseits und die Verschließmaschine andererseits nur eine Steuereinrichtung benötigt wird. Die Ansteuerung der Fördereinrichtung kann zudem sehr einfach gehalten werden und beispielsweise nur deren Ein- und Ausschalten zu Beginn und am Ende eines Produktionsvorgangs und gegebenenfalls ein Einstellen des Volumenstroms umfassen. Die aufgrund der Erfindung vereinfachte Steuerung stellt auch eine Erleichterung für eine Bedienperson und somit eine Vermeidung von Fehlerquellen dar. Nunmehr erfolgt die Bedienung der gesamten Portionier- und Verpackungsvorrichtung, nämlich statt bisher über zwei getrennte, nur noch über eine einzige Steuereinrichtung (Mensch-Maschine-Schnittstelle).

Vorzugsweise weist die Verschließvorrichtung paarweise gegenläufig bewegbare Einschnürmittel und Verschließwerkzeuge auf, wobei die Einschnürmittel sowie die Verschließwerkzeuge an zwei Kurbeln mit gleichen Radien angelenkt sind, die um ihre Drehachsen zyklisch, synchron und gleichsinnig aus einer Öffnungsstellung in eine Schließstellung und wieder in die Öffnungsstellung bezogen auf die Einschnürmittel und Verschließwerkzeuge antreibbar sind.

Eine solche Portioniervorrichtung ist beispielsweise aus der DE 101 31 807 bekannt. Die vergleichsweise reduzierten bewegten Massen werden aufgrund der gleichsinnig synchronen Umdrehung der Kurbeln in einem harmonischen, sinusoidalen Ablauf beschleunigt und verzögert. Durch diese einfache Kinematik kommt es im Betrieb zu einem weitgehenden Massen- und Kräfteausgleich, was eine hohe Drehzahl und dennoch einen sehr ruhigen Lauf der Vorrichtung ermöglicht. Clipmaschinen dieser Art haben deshalb eine sehr hohe Portionierleistung.

Unter Schließzeit ist nachfolgend die Zeit innerhalb des Arbeitszyklus (von Öffnungsstellung zu Öffnungsstellung) der Verschließvorrichtung gemeint, in der die Einschnürmittel und Verschließwerkzeuge sich in oder nahe der Schließstellung befinden. In der Schließzeit kann der kontinuierlich fortwährende Füllgutausstoß nicht zu einem Abziehen der Verpackungshülle vom Füllrohr führen. Anders als bei den bekannten Portionier- und Verpackungsvorrichtungen wird der Füllvorgang während der Schleißzeit oder während des ganzen Arbeitszyklus nicht durch eine Clippause unterbrochen.

Um einem Problem durch das sich bedingt durch den kontinuierlichen Volumenstrom während der (zwar sehr kurzen) Schließzeit vor den Einschnürmitteln aufstauenden Füllgut entgegen zu wirken, weist die Portioniervorrichtung vorzugsweise eine auf dem Füllrohr angeordnete Rückhaltevorrichtung mit einem das Füllrohr umfänglich umschließenden und parallel zu diesem hin- und herbeweglichen Bremsring zum Ausüben einer Reibungskraft auf die Verpackungshülle während des Abziehens auf.

Durch die axiale Beweglichkeit des Bremsrings kann dieser entgegen der Ausstoßrichtung für das Füllgut ausweichen und somit ein Verpackungsvolumen freigeben, in welches Füllgut beim Einschnüren und Verschließen verdrängt werden kann. Nach Ende der Schließzeit, wenn die Einschnürmittel und Verschließwerkzeuge die Verpackungshülle wieder freigeben, kann der Bremsring auf dem Füllrohr wieder in Ausstoßrichtung vorfahren und dabei das in dem zuvor freigegebenen Verpackungsvolumen befindliche Füllgut in die dann abgezogene Verpackungshülle abstreifen. Der Bremsring kann beispielsweise während des Zurückfahrens (Ausweichen) passiv durch den Druck des sich aufstauenden Füllguts angetrieben und beim Vorfahren durch eine auf diese Weise gespannte Feder in einer Ausgangslage zurück befördert werden.

Bevorzugt weist die Rückhaltevorrichtung aber einen mit der Verschließvorrichtung synchronisierbaren Antrieb zum Hin- und Herbewegen des Bremsringes auf.

Hierdurch wird eine definierte Ausweich- und Rückstellbewegung des Bremsrings erzeugt, welche die Genauigkeit des Portioniervorgangs erhöht.

Gemäß einer vorteilhaften Weiterbildung weist die Rückhaltevorrichtung einen Arbeitsspeicher und in Kraftflussrichtung dahinter eine Hemmung auf, die es ermöglicht, dass das Antriebsaggregat der Rückhaltevorrichtung im kontinuierlichen Betrieb arbeiten kann, während die Hemmung den Bremsring abtriebsseitig in dem gewünschten Haltepunkt festhält und die Antriebsenergie in dem Arbeitsspeicher deponiert wird.

Dies dient dazu, den Bremsring in der zurückgefahrenen Freigabestellung zu halten, bis die Einschnürmittel und Verschließwerkzeuge nach dem Verschließen den Weg ganz oder teilweise wieder freigegeben haben. Eine vorteilhafte Weiterbildung sieht vor, dass der Antrieb der Rückhaltevorrichtung ein Kurbelgetriebe mit einer Kurbel aufweist, welche abtriebsseitig mit dem Bremsring verbunden ist, wobei das Kurbelgetriebe bevorzugt antriebsseitig mit dem Rotationsantrieb für die Anschließvorrichtung gekoppelt ist.

Durch Verwendung eines einzigen Antriebsmotors sowohl für die Verschließvorrichtung als auch für die Rückhaltevorrichtung und die durch das Kurbelgetriebe sichergestellte Zwangskopplung, sind die Hin- und Herbewegungen der Rückhaltevorrichtung und die Hubbewegung der Einschnürmittel (Verdrängelemente) und der Verschließwerkzeuge (Stempel und Matrize) der Verschließvorrichtung immer zu einander synchron, also mechanisch zwangsgekoppelt.

Bevorzugt ist die Drehzahl des Rotationsantriebs mittels des Steuersignals veränderbar und im Bereich der Öffnungsstellung geringer als im Bereich der Schließstellung. Dies geschieht vorteilhafter Weise dadurch, dass die Steuereinrichtung eingerichtet ist, als Steuersignal auszugeben, mit welchem der Rotationsantrieb periodisch zur Ausführung eines Arbeitszyklus ansteuerbar ist.

Die geringere Drehzahl kann auch ein Anhalten der Verschließmaschine im Bereich der Öffnungsstellung einschließen. Beispielsweise kann durch ein periodisches Steuersignal ein Arbeitszyklus mit konstanter Rotationsgeschwindigkeit des Antriebs ausgelöst werden und der Antrieb danach im Bereich der Öffnungsstellung angehalten werden. Die Periodizität des von der Steuereinrichtung ausgegebenen Steuersignals richtet sich nach der Fülldauer für die ausgewählte Portionsgröße. Selbstverständlich kann dasselbe Ergebnis auch mit stufenweise oder stetig veränderlicher Antriebsgeschwindigkeit mit oder ohne Anhalten erreicht werden. Die Wahl der Ansteuerung bzw. Steuerung des Verschließmaschinenantriebs und damit der technische Aufwand kann sich nach dem Wurstprodukt richten.

In einer bevorzugten Weiterbildung ist (auch) der kontinuierliche Volumenstrom einstellbar.

Auf diese Weise wird ein weiterer einstellbarer Parameter geschaffen, welcher die Produktionsgeschwindigkeit beeinflusst. Dies ist vorteilhaft, wenn beispielsweise sehr unterschiedliche Portionsgrößen hergestellt werden oder das zu portionierende Füllgut sehr unterschiedliche Fließeigenschaften aufweist. Werden beispielsweise sehr kleine Portionsgrößen ausgewählt, so kann/muss der Volumenstrom soweit verringert werden, dass er bei maximaler Frequenz des Verschließvorgangs immer noch kontinuierlich ausgegeben werden kann. Die Einstellung des Volumenstroms kann beispielsweise durch eine Veränderung der Förderleistung der Pumpe oder durch eine Querschnittsveränderung an geeigneter Stelle in der Fördereinrichtung erzeugt werden.

Die Portionier- und Verpackungsvorrichtung weist bevorzugt eine mit der Steuereinrichtung verbundene Auswahleinrichtung mit Eingabemitteln zum Eingeben einer Portionsgröße auf. In einer bevorzugten Weiterbildung umfasst die Auswahleinrichtung eine Produktdatenbank, aus welcher mittels der Eingabemittel ein Produkt auswählbar ist.

Auf diese Weise kann eine Bedienperson beispielsweise ein Wurstprodukt auswählen, welches über die Produktdatenbank einer vorgegebenen Portionsgröße zugeordnet wird und so zur Verarbeitung eines Steuersignals der Steuereinrichtung zugeführt wird. Die Produktdatenbank kann beispielsweise in tabellarischer Form vorliegen. Sie kann manuell eingegeben und gepflegt werden und/oder voreingestellt sein.

Weitere Merkmale und Vorteile der erfindungsgemäßen Rückhaltevorrichtung finden sich in den Unteransprüchen. Diese werden unter Bezugnahme auf die beigefügten Figuren in der nachfolgenden Beschreibung anhand von Ausführungsbeispielen erläutert. Es zeigen:
- Fig. 1: eine schematisch vereinfachte, perspektivische Darstellung eines Ausführungsbeispiels der erfindungsgemäßen Portionier- und Verpackungsvorrichtung und
- Fig.2: eine schematisch vereinfachte Darstellung eines weiteren Ausführungsbeispiels der erfindungsgemäßen Portionier- und Verpackungsvorrichtung zur Erläuterung der Antriebssteuerung.

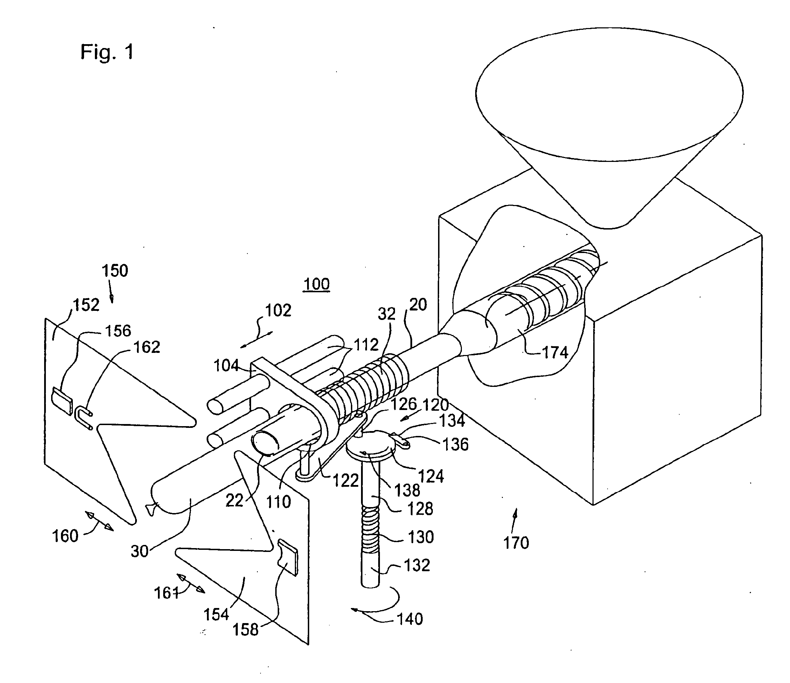

Die in Fig. 1 gezeigte Portionier- und Verpackungsvorrichtung weist erfindungsgemäß eine Fördereinrichtung 170 für das zu portionierende und zu verpackende Füllgut auf. Das Füllgut wird über eine Einfüllöffnung, in dem gezeigten Ausführungsbeispiels in Form eines Trichters 172, einer Pumpe zum Erzeugen eines kontinuierlichen Volumenstromes zugeführt. Die Pumpe umfasst einen Extruder 174, der das Füllgut kontinuierlich in Richtung eines sich an die Fördereinrichtung 170 anschließenden Füllrohrs 20 und durch dessen Mündung 22 in eine einseitig verschlossene schlauchförmige Verpackungshülle 30 fördert. Die Verpackungshülle 30 wird dabei von einem Vorrat 32 in Form einer gefalteten "Darmraupe" abgezogen.

Damit dies nicht unkontrolliert geschieht, wird mittels einer auf dem Füllrohr 20 angeordneten Rückhaltevorrichtung 100 und genauer mittels einem das Füllrohr 20 umfänglich umschließenden und parallel zu diesem entlang der durch einen Doppelpfeil 102 gekennzeichneten Richtung hin- und herbeweglichen Bremsring 110 ein Reibungswiderstand auf die Verpackungshülle 30 während des Abziehens ausgeübt. Der Bremsring 110 weist in seinem Inneren wenigstens einen elastischen Andruckring auf, welcher die Verpackungshülle gegen das Füllrohr 20 andrückt und auf diese Weise eine Reibungskraft beim Abziehen der Verpackungshülle verursacht.

Der Vorrat einer schlauchförmigen Verpackungshülle kann entweder, wie hier gezeigt, in Form einer ziehharmonikaartig gefalteten "Darmraupe", welche zuvor (manuell) auf das Füllrohr aufgezogen wurde, oder in Form eines in-situ aus einer Flachbandfolie über dem Füllrohr gefalteten und geschweißten oder gesiegelten, quasi-entlosen Folienschlauches bereitgestellt werden. Diese Verpackungshülle ist kann, wie zuvor beschrieben, von dem Füllgutausstoß passiv mitgenommen werden und/oder (unterstützend) durch eine Antriebseinreichung, beispielsweise mittels Reibrollen oder -bänder, aktiv in Stromrichtung gefördert werden.

Der Bremsring 110 ist in einem Halter 104 aufgenommen, der in Richtung 102 der Linearbewegung angetrieben wird. Der Halter 104 wird dazu an zwei parallel zu dem Füllrohr 20 ausgerichteten Schiene 112 geführt. Der Antrieb für die Hin- und Herbewegung des Halters 104 weist ein Kurbelgetriebe 120 auf, welches abtriebsseitig mit dem Halter 104 mittels eines Pleuels 122 verbunden ist. Das Kurbelgetriebe umfasst eine Kurbelscheibe 124 mit einem Kurbelzapfen 126, an dem der Pleuel 122 angelenkt ist. Die Kurbelscheibe 124 ist mit einer Abtriebswelle 128 verbunden. Diese wiederum wird mittels einer Schraubendruckfeder 130 - hier schematisch vereinfacht dargestellt - von einer Antriebswelle 132 angetrieben.

Die Kurbelscheibe 124 weist umfänglich einen Vorsprung 134 auf, der zusammen mit einer elastisch vorgespannten Klinke 136 als Drehhemmung dient. Wird die Kurbelscheibe 124 in Richtung des Pfeils 138 in die dargestellte Position gedreht, so hindert die Klinke 136 die Kurbelscheibe 124 an einer Weiterdrehung. Wird dann die Antriebswelle 132 weiter in der durch den Pfeil 140 gekennzeichneten Antriebsrichtung gedreht, so spannt dies die Feder 130, welche als Arbeitsspeicher in den Kraftfluss von der Antriebswelle 132 zum Bremsringhalter 104 eingeschaltet ist. Auf diese Weise kann die Kurbelscheibe 124 und somit über den Pleuel 122 auch der Bremsringhalter 104 mit Bremsring 110 in einen gewünschten Haltepunkt angehalten werden, während die Antriebswelle von einem Antriebsmotor weiter gedreht werden kann.

Anstelle der Schraubendruckfeder 130 zwischen der Antriebswelle 132 und der Abtriebswelle 128 kann der Arbeitsspeicher prinzipiell auch an jeder anderen Stelle in den Kraftfluss von der Antriebswelle zu dem Bremsringhalter 104 angeordnet sein. Dies kann beispielsweise im Bereich des Pleuels 122 geschehen. Entscheidend ist dabei, dass in Kraftflussrichtung dahinter die Hemmung der Hin- und Herbewegung des Halters 104 erfolgt, in diesem Beispiel müsste demnach der Halter 104 unmittelbar, beispielsweise im Bereich der Schiene 112 an einem bestimmten Haltepunkt angehalten werden.

An die Rückhaltevorrichtung 100 schließt sich stromabwärts des Füllrohrs 20 eine Verschließvorrichtung 150 an, welche in Fig. 1 stellvertretend durch ein paar gegenläufig bewegbare Einschnürmittel oder Verdrängerbleche 152, 154 und mit diesen synchron gegenläufig bewegbaren Verschließwerkzeugen, einem Stempel 156 und einer Matrize 158, stark vereinfacht illustriert ist. Die Verdränderbleche 152, 154 und Verschließwerkzeuge 156, 158 sind bevorzugt in einer Ebene senkrecht zur Füllrohr- und Schlauchachse ausgerichtet. Die durch Pfeile 160. 161 gekennzeichnete Bewegungsrichtung der Einschnürmittel und Verschließwerkzeuge ist schräg zur horizontalen Ebene skizziert. Diese Bewegungsrichtung ist jedoch beliebig und kann ferner durch eine Pendelbewegung überlagert sein. In der Fig. 1 ist die Verschließvorrichtung 150 in einer Öffnungsstellung gezeigt. Alle Verdrängerbleche 152, 154 weisen an ihrem freien Ende einen im wesentlichen dreiecks- oder V-förmigen Ausschnitt auf. Sie sind jeweils mit diesen Ausschnitten paarweise einander zugewandt. In der Öffnungsstellung bilden die Ausschnitte somit eine um die Schlauch- oder Zentralachse symmetrisch angeordnete, rautenförmige Öffnung. Diese Öffnung ist groß genug, um die befüllte Schlauchhülle 30 passieren zu lassen.

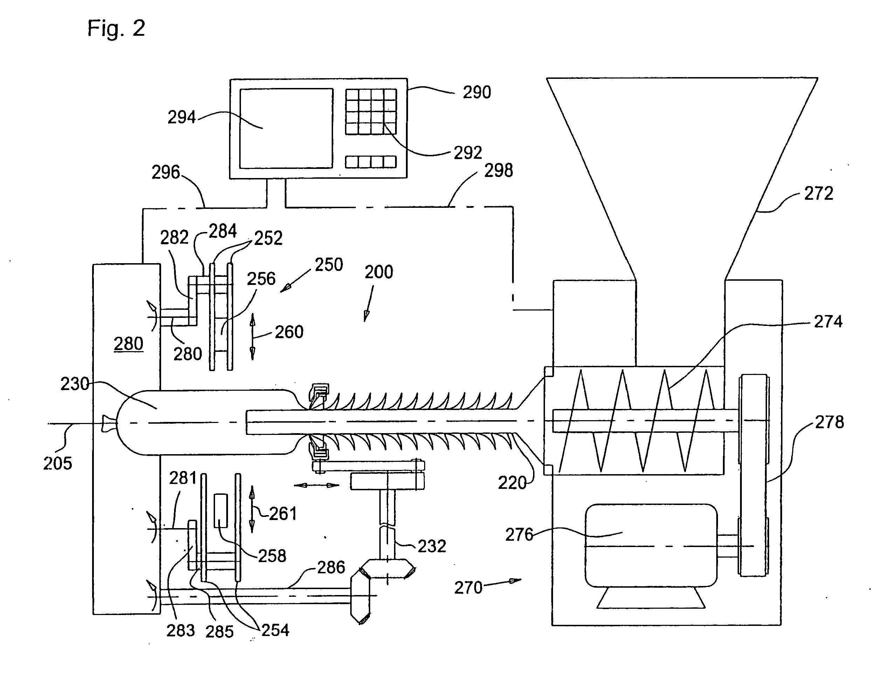

Tatsächlich weist die Verschließvorrichtung nicht ein Paar Einschnürmittel sondern eine Vielzahl von Paaren gegenläufig bewegbarer Einschnürmittel auf, wie aus Fig. 2 ersichtlich wird. Auch macht Fig. 1 keine Aussage darüber auf welche Weise die Einschnürmittel und Verschließwerkzeuge angetrieben werden. Deren Antrieb wird ebenfalls im Zusammenhang mit Fig. 2 genauer erläutert.

Nachfolgend wird das von der Portionier- und Verschließvorrichtung gem. Fig. 1 ausgeführte Verfahren geschildert. Zunächst wird das Füllgut durch den Extruder 174 der Fördereinrichtung 170 kontinuierlich durch das Füllrohr 20 und dessen Mündung 22 in die einseitig verschlossene schlauchförmige Verpackungshülle 30 gefördert. Dabei wird die Verpackungshülle durch den Füllgutausstoß von dem Vorrat 32 gegen die von dem das Füllrohr umfänglich umschließenden Bremsring 110 ausgeübte Reibungskraft abgezogen.

Bevor die ausgewählte Portionsgröße erreicht wird, wird der Bremsring 110 zusammen mit dem Bremsringhalter 104, angetrieben durch das Kurbelgetriebe 120, auf dem Füllrohr 20 entgegen der Abzugsrichtung in eine Freigabestellung zum Freigeben eines Verpackungsvolumens zurückgefahren.

Während zumindest teilweise zeitlich überlappend der Bremsringhalter 104 mit dem Bremsring 110 in der Freigabestellung mittels der Drehhemmung der Klinke 136 angehalten wird, werden die Einschnürmittel 152, 154 in eine Schließstellung aufeinander zu bewegt und das in dem Einschnürbereich befindliche Füllgut dabei in das freigegebene Verpackungsvolumen verdrängt. D.h. die Verpackungshülle 30 wird lokal zu einem Schlauchzopf eingeschnürt. Gleichzeitig oder etwas zeitversetzt werden auch die Verschließwerkzeuge 156, 158 in die Schließstellung aufeinander zu bewegt, wodurch ein oder zwei Verschlusselemente 162 (axial versetzt) mittels der Verschließwerkzeuge 156, 158 um den gebildeten Schlauchzopf herum verformt wird, bis die Verpackung dicht verschlossen ist. Gegebenenfalls wird die Verpackungshülle zwischen den beiden Verschlusselemente von einem nicht dargestellten Messer nach dem Verschließen durchtrennt.

In einem nächsten Arbeitstakt werden die Verschließwerkzeuge 156, 158 und Verdrängerbleche 152, 154 wieder in ihre Öffnungsstellung auseinander gefahren und geben einen größeren Querschnitt zum erneuten Befüllen der nachfolgenden Verpackung frei. In dieser Zeit wird auch die Drehhemmung durch das Lösen der Klinke 136 und das Freigeben des Vorsprungs 134 der Kurbelscheibe 124 aufgehoben Das Freigeben der Kurbelscheibe 124 bewirkt, dass die in der Schraubendruckfeder 130 gespeicherte Arbeit die Abtriebswelle 128 mit der Kurbelscheibe 124 beschleunigt antreibt, bis diese der zwischenzeitlich weiter gedrehten Winkelstellung der Antriebswelle 132 nachgefolgt ist. Dadurch wird der Halter 104 mit Bremsring 110 in eine vordere Stellung auf dem Füllrohr 20 gefahren und das zuvor verdrängte und zwischenzeitlich aufgestaute Füllgut aus dem freigegebenen Volumen in die nächste Portionspackung abgestreift.

Die Haltedauer (also der Zeitpunkt der Freigabe) hängt u. a. vom Kaliber der hergestellten Wurst ab und wird nach Erfahrung eingestellt. Es ist dabei darauf zu achten dass der Bremsring 110 nicht zu früh, also noch im verschlossenen Zustand oder während des Öffnens der Verdrängerbleche, in die vordere Stellung fährt. Ansonsten droht die Gefahr, dass die Verpackungshülle platzt, weil das in dem Freigabevolumen befindliche Füllgut gegen die (teilweise) verschlossenen Verdrängerelemente gedrückt wird. Der Haltepunkt hingegen, d.h. die Position an der sich die Klinke befindet oder an der Kurbelscheibe angreift ist so gewählt, dass das Freigabevolumen dem beim Abteilen und Verschließen verdrängten und ggf. bei kontinuierlicher Befüllung weiterbefüllen Volumen des Füllguts möglichst exakt entspricht, um eine möglichst hohe Gewichtsgenauigkeit der Portionen (Würste) zu erzielen.

Fig. 2 zeigt - ebenfalls in schematischer Vereinfachung - ein Ausführungsbeispiel der erfindungsgemäßen Portionier- und Verpackungsvorrichtung. Dieses besteht aus den unter Bezugnahme auf Fig. 1 näher erläuterten drei wesentlichen Einrichtungen, nämlich der Fördereinrichtung 270, der Verschließvorrichtung 250 und der auf dem Füllrohr 220 hin- und herbeweglichen Rückhaltevorrichtung 200. Die Fördereinrichtung 270 weist einen Antriebsmotor 276 auf, der mittels eines Getriebes 278 auf die Extruderschnecke 274 wirkt. Das Getriebe kann beispielsweise ein Umschlingungsgetriebe und/oder ein Zahnradgetriebe mit einer gewünschten Übersetzung sein.

Die Verschließvorrichtung 250 weist jeweils um eine obere und eine untere Drehachse 280, 281 gelagerte Kurbeln 282, 283 gleicher Radien auf. An deren Kurbelzapfen 284, 285 sind jeweils mehrere, axial beabstandete, parallel angeordnete obere bzw. untere Verdrängerbleche 252, 254 angelenkt. Die Verdrängerbleche werden jeweils an ihren parallelen, geraden Außenkanten in einem um die Schlauchachse 205 schwenkbaren, nicht dargestellten Führungselement geführt. Die oberen und unteren Verdrängerbleche führen dadurch im Bereich der Schlauchachse eine im Wesentlichen lineare gegenläufige Relativbewegung in ihrer durch Doppelpfeile 260, 261 gekennzeichneten Hauptbewegungsrichtung aus. Sie wirken dabei jeweils paarweise überlappend dergestalt zusammen, dass sie - im Idealfall berührungsfrei - den Querschnitt der Schlauchhülle 230 einengen und somit das Füllgut aus dem entsprechenden Abschnitt der Schlauchhülle axial verdrängen. Darüber hinaus

In den axialen Zwischenräumen zwischen den auf jeweils einem Kurbelzapfen 264, 266 angeordneten Verdrängerblechen 252, 254 befinden sich die ebenfalls auf den Kurbelzapfen drehbar angelenkten Verschließwerkzeuge, Stempel 256 und Matrize 258. Die Bewegungen des Stempels und der Matrize sind somit mit der Bewegung der oberen bzw. unteren Verdrängerbleche gekoppelt.

Kurbeln sind gleichsinnig drehend angetrieben, so dass der linearen Relativbewegung eine sinusoidale Pendelbewegung der gesamten Anordnung bestehend aus Einschnürelementen, Verschließwerkzeugen und dem nicht dargestellten Führungselement überlagert ist. Der Antrieb 280 der Verschließvorrichtung weist ein nicht näher dargestellten Motor auf, der auf ebenfalls nicht näher dargestellte Weise auf beide Kurbeln 262, 263 wirkt. Der Motor ist vorzugsweise ein Elektromotor, der mittels Umschlingungstrieb mit beiden Kurbeln gekoppelt ist.

Zusätzlich der Antrieb 280 der Verschließvorrichtung über eine Anschlusswelle 286 mit der Antriebswelle 232 der Rückhaltevorrichtung 200 gekoppelt. Diese Kopplung verbindet denselben Antriebsmotor beispielsweise ebenfalls über einen Umschlingungstrieb und/oder ein Zahnradgetriebe mit der Rückhaltevorrichtung 200 und stellt somit eine mechanische Zwangskopplung zwischen der Bewegung der Rückhaltevorrichtung und der Verschließmaschine her. Alternativ kann die Rückhaltevorrichtung auch durch einen separaten Motor angetrieben werden, der beispielsweise elektronisch mit dem Antrieb 280 der Verschließvorrichtung synchronisierbar ist.

Die Steuerung der Portionier- und Verpackungsvorrichtung erfolgt mittels einer Steuereinrichtung 290. Diese umfasst eine Auswahleinrichtung, welche Eingabemittel 292 und eine Anzeige 294 umfasst, mittels der eine Bedienperson eine gewünschte Produktauswahl treffen oder direkt eine gewünschte Portionsgröße auswählen kann. Für den ersten Fall ist eine Produktdatenbank (Datenspeicher) vorgesehen, die eine Zuordnungsinformation zwischen der Produktauswahl und Portionsgröße enthält. Die Steuereinrichtung 290 erzeugt ein Steuersignal zum Einschnüren und Verschließen, wenn unter Berücksichtung der Volumenstrominformation die direkt eingegebenen oder aus der Produktdatenbank abgefragten, ausgewählten Portionsgröße erreicht ist. Sie gibt das Steuersignal über eine Signalleitung 296 an den Antrieb 280 der Verschließvorrichtung 250 aus. Diese führt darauf hin einen Arbeitszyklus aus und verschließt die Verpackungshülle während die Fördereinrichtung weiterläuft.

Die Steuereinrichtung ist ferner über eine zweite Signalleitung 298 mit dem Antrieb der Fördereinrichtung 270 verbunden. Hierüber erhält sie beispielsweise eine Drehzahlinformation des Antriebs der Fördereinrichtung und errechnet die benötigte Information über den Volumenstrom. Dies schließt nicht aus, dass der Volumenstrom veränderbar, d.h. beispielsweise durch eine Drehzahlveränderung einstellbar ist. Bevorzugt gibt die Steuereinrichtung aber umgekehrt über die zweite Signalleitung 298 ein Steuersignal an den Antrieb der Fördereinrichtung 270 aus, und stellt so eine angemessene, von der Produktauswahl bzw. der ausgewählten Portionsgröße abhängige Förderleistung bzw. den Volumenstrom ein. Hierbei kann beispielsweise sowohl die maximale Arbeitsgeschwindigkeit der Verschließvorrichtung 250 als auch die Fließeigenschaft des Füllguts berücksichtigt werden. Dies macht die Bedienung besonders komfortabel, da allein über die Produktauswahl eine optimale Einstellung aller Parameter vorgenommen wird.

## Patentansprüche

1. Portionier- und Verpackungsvorrichtung mit
einer Fördereinrichtung (170, 270) für Füllgut,
einem an die Fördereinrichtung (170, 270) angeschlossenen Füllrohr (20, 220), welches eingerichtet ist, einen Vorrat (32) einer schlauchförmigen Verpackungshülle (30, 230) so bereitzustellen, dass diese mit dem durch das Füllrohr (20, 220) ausgestoßenen Füllgut von dem Füllrohr (20, 220) abziehbar ist (Füllvorgang),
einer stromabwärts des Füllrohres (20, 220) angeordneten Verschließvorrichtung (150, 250), welche eingerichtet ist, die gefüllte Verpackungshülle (30) während des Füllvorgangs lokal zu einem Schlauchzopf einzuschnüren und ein Verschlusselement (162) um den Schlauchzopf zu verschließen (Verschließvorgang), und welche
eine Steuereinrichtung (290) aufweist; und
eine auf dem Füllrohr (20, 220) angeordnete Rückhaltevorrichtung (100,200) mit einem das Füllrohr (20, 220) umfänglich umschließenden und parallel zu diesem hin- und herbeweglichen Bremsring (110) zum Ausüben einer Reibungskraft auf die Verpackungshülle (30, 230) während des Abziehens,
**dadurch gekennzeichnet, dass** die Fördereinrichtung (170, 270) eine Pumpe zum Erzeugen eines kontinuierlichen Volumenstromes aufweist,
dass die Steuereinrichtung (290) eingerichtet ist, ein Steuersignal zum Einschnüren und Verschließen auf Grundlage einer ausgewählten Portionsgröße und des kontinuierlichen Volumenstromes zu erzeugen und an einen Antrieb der Verschließvorrichtung (150, 250) auszugeben, und
dass der Bremsring (110) eingerichtet ist, auf dem Füllrohr (20, 220) entgegen der Abzugsrichtung in eine Freigabestellung zum Freigeben eines Verpackungsvolumens unmittelbar vor oder während des Einschnürens und Verschließens zurückzufahren und nach dem Verschließen wieder auf dem Füllrohr (20, 220) in Abzugsrichtung in eine Arbeitsstellung vorzufahren, wobei beim Einschnüren und Verschließen das im Einschnürbereich befindliche Füllgut in das freigegebene Verpackungsvolumen verdrängt und nach dem Verschließen wieder in die abgezogene Verpackungshülle (30) abgestreift wird.

2. Portionier- und Verpackungsvorrichtung nach Anspruch 1,
**dadurch gekennzeichnet, dass** die Rückhaltevorrichtung (100, 200) einen mit der Verschließvorrichtung (150, 250) synchronisierbaren Antrieb (280) zum Hin- und Herbewegen des Bremsrings (110) aufweist.

3. Portionier- und Verpackungsvorrichtung nach Anspruch 1 oder 2,
**dadurch gekennzeichnet, dass** die Rückhaltevorrichtung (100, 200) einen Arbeitsspeicher und in Kraftflussrichtung dahinter eine Hemmung aufweist, um den Bremsring (110) in einem Haltepunkt anzuhalten.

4. Portionier- und Verpackungsvorrichtung nach einem der vorstehenden Ansprüche,
**dadurch gekennzeichnet, dass** die Verschließvorrichtung (150, 250) paarweise gegenläufig bewegbare Einschnürmittel (152, 154, 252, 254) und Verschließwerkzeuge (156, 158, 256, 258) aufweist, wobei die Einschnürmittel sowie die Verschließwerkzeuge an zwei Kurbeln mit gleichen Radien angelenkt sind, die um ihre Drehachsen (280) zyklisch, synchron und gleichsinnig aus einer Öffnungsstellung in eine Schließstellung und wieder in die Öffnungsstellung bezogen auf die Einschnürmittel und Verschließwerkzeuge (Arbeitszyklus) antreibbar sind.

5. Portionier- und Verpackungsvorrichtung nach Anspruch 4,
**dadurch gekennzeichnet, dass** der Antrieb der Verschließvorrichtung (150, 250) ein auf beide über einen Umschlingungstrieb gekoppelte Kurbeln wirkender Rotationsantrieb (280) ist.

6. Portionier- und Verpackungsvorrichtung nach einem der vorstehenden Ansprüche,
**dadurch gekennzeichnet, dass** die Verschließvorrichtung (150, 250) eine Doppelanordnung paarweise gegenläufig bewegbarer Einschnürmittel (152, 154, 252, 254) und Verschließwerkzeuge (156, 158, 256, 258) aufweist, die so angeordnet sind, dass gleichlaufend zwei Verschlusselemente mit Abstand voneinander auf den Schlauchzopf gesetzt werden können.

7. Portionier- und Verpackungsvorrichtung nach einem der vorstehenden Ansprüche,
**dadurch gekennzeichnet, dass** der Volumenstrom mittels der Steuereinrichtung (290) regelbar ist.

8. Portionier- und Verpackungsvorrichtung nach einem der vorstehenden Ansprüche,
**gekennzeichnet durch** eine mit der Steuereinrichtung (290) verbundene Auswahleinrichtung mit Eingabemitteln (292) zum Eingeben einer Portionsgröße.

9. Portionier- und Verpackungsverfahren für Füllgut mit den Schritten:
Fördern des Füllguts durch eine Mündung eines Füllrohres (20, 220) in eine einseitig verschlossene, schlauchförmige Verpackungshülle (30) (Füllen), die mit dem Füllgutausstoß von einem Vorrat auf dem Füllrohr (20, 220) abgezogen wird,
Einschnüren der gefüllten Verpackungshülle (30) während des Füllens stromabwärts des Füllrohres (20, 220) zu einem Schlauchzopf und Verschließen eines Verschlusselements (162) um den Schlauchzopf,
**dadurch gekennzeichnet, dass** das Füllgut in einem kontinuierlichen Volumenstrom durch eine Mündung eines Füllrohres (20, 220) gefördert wird,
dass das Einschnüren und Verschließen in auf Grundlage einer ausgewählten Portionsgröße und des kontinuierlichen Volumenstromes berechneten, periodischen Intervallen erfolgt, und
dass der Bremsring (110) auf dem Füllrohr (20, 220) entgegen der Abzugsrichtung in eine Freigabestellung zum Freigeben eines Verpackungsvolumens unmittelbar vor oder während des Einschnürens und Verschließens zurückgefahren und nach dem Verschließen wieder auf dem Füllrohr (20, 220) in Abzugsrichtung in eine Arbeitsstellung vorgefahren wird, wobei beim Einschnüren und Verschließen das im Einschnürbereich befindliche Füllgut in das freigegebene Verpackungsvolumen verdrängt und nach dem Verschließen wieder in die abgezogene Verpackungshülle (30) abgestreift wird.

10. Portionier- und Verpackungsverfahren nach Anspruch 9,
**gekennzeichnet durch** die Schritte
Ausüben einer Reibungskraft auf die Verpackungshülle (30) beim Abziehen derselben von dem Füllrohr (20, 220) mittels eines das Füllrohr (20, 220) umfänglich umschließenden Bremsrings (110).

## Claims

1. A portioning and packaging apparatus comprising
a conveyor device (170, 270) for filling material,
a filling tube (20, 220) which is connected to the conveyor device (170, 270) and which is adapted to provide a supply (32) of a tubular packaging case (30, 230) such that it can be pulled off the filling tube (20, 220) with the filling material which has been expelled through the filling tube (20, 220) (filling operation), and
a closure device (150, 250) which is arranged downstream of the filling tube (20, 220) and which is adapted to locally constrict the filled packaging case (30) to provide a tube end plait portion during the filling operation and to close a closure element (162) around the tube end plait portion (closing operation), and which has
a control device (290); and
a retaining device (100, 200) which is arranged on the filling tube (20, 220) and which has a braking ring (110) which circumferentially surrounds the filling tube (20, 220) and is reciprocatable parallel thereto for applying a friction force to the packaging case (30, 230) while it is being pulled off,
**characterized in that** the conveyor device (170, 270) has a pump for producing a continuous volume flow,
the control device (290) is adapted to produce a control signal for the constriction and closure operations on the basis of a selected portion size and the continuous volume flow and to output it to a drive of the closure device (150, 250), and
the braking ring (110) is adapted to be retracted on the filling tube (20, 220) in opposite relationship to the pull-off direction into a clearance position for clearing a packaging volume immediately prior to or during the constriction and closure operations and after the closure operation to be advanced on the filling tube (20, 220) again in the pull-off direction into a working position, wherein in the constriction and closure operations the filling material disposed in the constriction region is displaced into the cleared packaging volume and after the closure operation is stripped off again into the pulled-off packaging case (30).

2. A portioning and packaging apparatus according to claim 1 **characterized in that** the retaining device (100, 200) has a drive (280) synchronizable with the closure device (150, 250) for the reciprocating movement of the braking ring (110).

3. A portioning and packaging apparatus according to claim 1 or claim 2 **characterized in that** the retaining device (100, 200) has a work storage means and downstream thereof in the force flow direction a check means in order to stop the braking ring (110) in a holding point.

4. A portioning and packaging apparatus according to one of the preceding claims **characterized in that** the closure device (150, 250) has closure tools (156, 158, 256, 258) and constriction means (152, 154, 252, 254) which are movable in pairs in opposite relationship, wherein the constriction means and the closure tools are pivotably connected to two cranks of equal radii which are drivable about their axes of rotation (280) cyclically, synchronously and in the same direction from an open position into a closed position and back into an open position again with respect to the constriction means and closure tools (working cycle).

5. A portioning and packaging apparatus according to claim 4 **characterized in that** the drive of the closure device (150, 250) is a rotary drive (280) acting on both cranks which are coupled by way of a wrapround transmission.

6. A portioning and packaging apparatus according to one of the preceding claims **characterized in that** the closure device (150, 250) has a double arrangement of closure tools (156, 158, 256, 258) and constriction means (152, 154, 252, 254) which are movable in pairs in opposite relationship and which are so arranged that two closure elements can be synchronously applied to the tube end plait portion at a spacing from each other.

7. A portioning and packaging apparatus according to one of the preceding claims **characterized in that** the volume flow is regulatable by means of the control device (290).

8. A portioning and packaging apparatus according to one of the preceding claims **characterized by** a selection device connected to the control device (290) and having input means (292) for inputting a portion size.

9. A portioning and packaging method for filling material comprising the steps:
conveying the filling material through a mouth opening of a filling tube (20, 220) into a tubular packaging case (30) which is closed at one end (filling) and which is pulled off with the expulsion of filling material from a supply on the filling tube (20, 220), and
constricting the filled packaging case (30) during the filling operation downstream of the filling tube (20, 220) to provide a tube end plait portion and closing a closure element (162) around the tube end plait portion,
**characterized in that** the filling material is conveyed in a continuous volume flow through a mouth opening of a filling tube (20, 220)
the constriction and closing operations are effected at periodic intervals calculated on the basis of a selected portion size and the continuous volume flow, and
the braking ring (110) is retracted on the filling tube (20, 220) in opposite relationship to the pull-off direction into a clearance position for clearing a packaging volume immediately prior to or during the constriction and closure operations and after the closure operation is advanced on the filling tube (20, 220) again in the pull-off direction into a working position, wherein in the constriction and closure operations the filling material disposed in the constriction region is displaced into the cleared packaging volume and after the closure operation is stripped off again into the pulled-off packaging case (30).

10. A portioning and packaging method according to claim 9 **characterized by** the steps of applying a friction force to the packaging case (30) when pulling same off the filling tube (20, 220) by means of a braking ring (110) which circumferentially surrounds the filling tube (20, 220).

## Revendications

1. Dispositif de portionnement et d'emballage comprenant
un système (170, 270) de convoyage de produit d'emplissage,
un tube d'emplissage (20, 220) raccordé audit système de convoyage (170, 270) et agencé pour tenir en attente une réserve (32) d'une enveloppe d'emballage (30, 230) en forme de boyau souple, de telle sorte que cette dernière puisse être déboîtée du tube d'emplissage (20, 220) conjointement au produit d'emplissage expulsé par ledit tube d'emplissage (20, 220) (processus d'emplissage),
un dispositif obturateur (150, 250) qui est placé en aval du tube d'emplissage (20, 220), est agencé de manière à resserrer localement l'enveloppe d'emballage (30) emplie, au cours du processus d'emplissage, afin de former une natte de boyau souple, et à implanter un élément d'obturation (162) autour de ladite natte de boyau souple (processus de fermeture), et est muni
d'un système de commande (290) ; et
un dispositif de retenue (100, 200) mis en place sur le tube d'emplissage (20, 220) et pourvu d'une bague de freinage (110) ceinturant périphériquement ledit tube d'emplissage (20, 220) et pouvant être animée de va-et-vient parallèlement à ce dernier, en vue d'appliquer une force de frottement à l'enveloppe d'emballage (30, 230) au cours du déboîtement,
**caractérisé par le fait que** le système de convoyage (170, 270) présente une pompe pour engendrer un flux volumique continu ;
**par le fait que** le système de commande (290) est conçu pour générer un signal de commande visant au resserrement et à la fermeture, sur la base d'une taille de portion choisie et dudit flux volumique continu, et pour délivrer ledit signal à un entraînement du dispositif obturateur (150, 250) ; et
**par le fait que** la bague de freinage (110) est conçue pour retourner sur le tube d'emplissage (20, 220), en sens inverse de la direction de déboîtement, immédiatement avant ou pendant le resserrement et la fermeture, à une position de libération visant à libérer un volume de conditionnement ; et pour avancer de nouveau sur ledit tube d'emplissage (20, 220) jusqu'à une position de travail, dans la direction du déboîtement, à l'issue de la fermeture, sachant que, lors du resserrement et de la fermeture, le produit d'emplissage situé dans la zone resserrée est refoulé dans le volume de conditionnement libéré, puis est de nouveau raclé, à l'issue de la fermeture, jusque dans l'enveloppe d'emballage (30) déboîtée.

2. Dispositif de portionnement et d'emballage selon la revendication 1,
**caractérisé par le fait que** le dispositif de retenue (100, 200) présente un entraînement (280) pouvant être synchronisé avec le dispositif obturateur (150, 250) en vue d'imprimer des va-et-vient à la bague de freinage (110).

3. Dispositif de portionnement et d'emballage selon la revendication 1 ou 2,
**caractérisé par le fait que** le dispositif de retenue (100, 200) présente une mémorisation active et un blocage placé derrière celle-ci dans la direction du flux de forces, de manière à arrêter la bague de freinage (110) en un point de retenue.

4. Dispositif de portionnement et d'emballage selon l'une des revendications précédentes,
**caractérisé par le fait que** le dispositif obturateur (150, 250) comporte des moyens de resserrement (152, 154, 252, 254) et des outils d'obturation (156, 158, 256, 258) mobiles par paires dans des sens opposés, lesdits moyens de resserrement, ainsi que lesdits outils d'obturation, étant articulés sur deux manivelles de rayons identiques qui peuvent être entraînées cycliquement, avec synchronisme et dans des sens identiques, autour de leurs axes de rotation (280), d'une position d'ouverture à une position de fermeture, puis de nouveau à la position d'ouverture vis-à-vis desdits moyens de resserrement et outils d'obturation (cycle de travail).

5. Dispositif de portionnement et d'emballage selon la revendication 4,
**caractérisé par le fait que** l'entraînement du dispositif obturateur (150, 250) est un entraînement en rotation (280) agissant sur les deux manivelles couplées par l'intermédiaire d'une transmission par enlacement.

6. Dispositif de portionnement et d'emballage selon l'une des revendications précédentes,
**caractérisé par le fait que** le dispositif obturateur (150, 250) présente un ensemble jumelé de moyens de resserrement (152, 154, 252, 254) et d'outils d'obturation (156, 158, 256, 258) mobiles par paires dans des sens opposés et disposés de façon telle que deux éléments d'obturation puissent être placés sur la natte de boyau souple, de manière synchrone, à distance l'un de l'autre.

7. Dispositif de portionnement et d'emballage selon l'une des revendications précédentes,
**caractérisé par le fait que** le flux volumique peut être régulé au moyen du système de commande (290).

8. Dispositif de portionnement et d'emballage selon l'une des revendications précédentes,
**caractérisé par** un système de sélection relié au système de commande (290) et pourvu de moyens d'entrée (292) conçus pour entrer une taille de portion.

9. Procédé de portionnement et d'emballage d'un produit d'emplissage, comprenant les étapes consistant à :
acheminer ledit produit d'emplissage, par une embouchure d'un tube d'emplissage (20, 220), jusque dans une enveloppe d'emballage (30) en forme de boyau souple, obturée d'un côté (emplissage), qui est extraite avec le produit d'emplissage expulsé d'une réserve, sur ledit tube d'emplissage (20, 220),
resserrement de ladite enveloppe d'emballage emplie (30) au cours de l'emplissage, en aval dudit tube d'emplissage (20, 220), afin de former une natte de boyau souple, et
implantation d'un élément d'obturation (162) autour de ladite natte de boyau souple,
**caractérisé par le fait que** le produit d'emplissage est convoyé en un flux volumique continu par une embouchure d'un tube d'emplissage (20, 220) ;
**par le fait que** le resserrement et la fermeture ont lieu selon des intervalles périodiques calculés sur la base d'une taille de portion choisie et dudit flux volumique continu ; et
**par le fait que** la bague de freinage (110) est ramenée sur le tube d'emplissage (20, 220) en sens inverse de la direction de déboîtement, immédiatement avant ou pendant le resserrement et la fermeture, à une position de libération visant à libérer un volume de conditionnement ; et est avancée de nouveau sur ledit tube d'emplissage (20, 220) jusqu'à une position de travail, dans la direction du déboîtement, à l'issue de la fermeture, sachant que, lors du resserrement et de la fermeture, le produit d'emplissage situé dans la zone resserrée est refoulé dans le volume de conditionnement libéré, puis est de nouveau raclé, à l'issue de la fermeture, jusque dans l'enveloppe d'emballage (30) déboîtée.

10. Procédé de portionnement et d'emballage selon la revendication 9,
**caractérisé par** l'étape consistant à
appliquer une force de frottement à l'enveloppe d'emballage (30), lors du déboîtement de cette dernière d'avec le tube d'emplissage (20, 220), au moyen d'une bague de freinage (110) ceinturant périphériquement ledit tube d'emplissage (20, 220).
